(19) Europäisches Patentamt
European Patent Office
Office européen des brevets

(11) **EP 2 804 826 B1**

## (12) EUROPÄISCHE PATENTSCHRIFT

(45) Veröffentlichungstag und Bekanntmachung des Hinweises auf die Patenterteilung:
**25.05.2016 Patentblatt 2016/21**

(21) Anmeldenummer: **13708718.5**

(22) Anmeldetag: **27.02.2013**

(51) Int Cl.:
**B65H 26/00** (2006.01) **B65H 23/192** (2006.01)

(86) Internationale Anmeldenummer:
**PCT/EP2013/053865**

(87) Internationale Veröffentlichungsnummer:
**WO 2013/127815 (06.09.2013 Gazette 2013/36)**

(54) **ÜBERWACHUNG EINER BAHNGESCHWINDIGKEIT EINER MATERIALBAHN**

MONITORING A WEB SPEED OF A MATERIAL WEB

SURVEILLANCE DE LA VITESSE DE DÉPLACEMENT D'UNE BANDE DE MATIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2012 DE 102012203002**

(43) Veröffentlichungstag der Anmeldung:
**26.11.2014 Patentblatt 2014/48**

(73) Patentinhaber: **Siemens Aktiengesellschaft 80333 München (DE)**

(72) Erfinder:
• **MERKEL, Christian 91052 Erlangen (DE)**
• **RASENACK, Wolf-Martin 91080 Marloffstein (DE)**
• **REBLING, Mathias 90475 Nürnberg (DE)**

(56) Entgegenhaltungen:
**EP-A1- 0 698 572 EP-A2- 1 136 258
DE-A1-102008 053 249**

**Beschreibung**

Die Erfindung betrifft ein Verfahren und eine Vorrichtung zur Überwachung einer Bahngeschwindigkeit einer durch Rollen bewegten Materialbahn.

Unter einer Materialbahn wird dabei eine Bahn aus einem Flachmaterial, beispielsweise aus Papier, Kunststoff oder Metall, verstanden.

Bei Maschinen mit durchlaufenden, durch Rollen bewegten Materialbahnen sind die Umfangsgeschwindigkeiten der antreibenden Rollen und die damit zusammenhängende Bahngeschwindigkeit der Materialbahnen zu überwachen. Insbesondere sind zwei Geschwindigkeitsschwellenwerte zu berücksichtigen: eine maximale mechanische Bahngeschwindigkeit, die nicht überschritten werden darf, um eine Beschädigung der Maschine zu vermeiden, und eine so genannte sichere Geschwindigkeit, bei der es den Bedienern erlaubt ist, Gefahrenbereiche während der Bewegung der Maschine zu betreten, beispielsweise um Wartungsarbeiten durchzuführen.

DE 44 30 550 A1 offenbart ein Verfahren zur Steuerung von Bahngeschwindigkeiten in einer Einrichtung für den Transport einer elastischen Materialbahn oder der Streckung einer plastisch verformbaren Materialbahn, wobei die Transport- oder Streckmittel jeweils elektrische Antriebe enthalten, die in Drehzahlregelkreisen angeordnet sind. Dabei werden aus einer Leitgeschwindigkeit der Materialbahn und der jeweiligen Verstreckung zugehörige Sollwerte von Bahngeschwindigkeiten bestimmt, aus denen mittels der Durchmesser von mit den Antrieben verbundenen Rollen und eventuell mittels Getriebeübersetzungsverhältnissen eine Solldrehzahl für den Drehzahlregelkreis bestimmt wird DE 101 04 795 A1 offenbart ein Verfahren zur Sollwertkorrektur für eine elektrisch gesteuerte oder geregelte Slaveachse, die entsprechend einem vorgegebenen funktionalen Zusammenhang einer Leitbewegung einer übergeordneten Leitachse folgt. Dabei wird ein jeweiliger Lageistwert der Leitachse zur Ansteuerung der Slaveachse um einen Lagekorrekturwert vergrößert. DE 26 13 600 A1 offenbart eine Drehzahlregelung für eine bahnfördernde Maschine, wobei Drehzahlreglern für durchmessergleiche Walzen jeweils gleiche Drehzahl-Sollwerte vorgegeben werden und geeignete Drehzahl-Sollwerte für Walzen bzw. Walzengruppen mit von einem Leitwalzendurchmesser abweichendem Durchmesser vorgesehen sind, die von Bandzugreglern korrigiert werden.

DE 692 02 132 T2 offenbart ein Antriebssystem für Bahnförderer, mit einer Antriebsrollenvorrichtung mit einer Vielzahl von Bahnantriebsrollen, die je einen mit den Antriebsrollen gekoppelten, unabhängigen Motorantrieb haben, wobei jeder Motorantrieb Mittel zum Liefern eines seinem jeweiligen Motorantriebsstrom entsprechenden Ausgangssignals aufweist.

EP 0 698 572 A1 offenbart ein Verfahren zur Steuerung von Bahngeschwindigkeiten in einer Einrichtung für den Transport einer elastischen Materialbahn oder der Streckung einer plastisch verformbaren Materialbahn, wobei die Transport- oder Streckmittel jeweils elektrische Antriebe enthalten, die in Drehzahlregelkreisen angeordnet sind.

Der Erfindung liegt die Aufgabe zugrunde, ein verbessertes Verfahren und eine verbesserte Vorrichtung zur Überwachung einer Bahngeschwindigkeit einer durch Rollen bewegten Materialbahn anzugeben.

Die Aufgabe wird erfindungsgemäß hinsichtlich des Verfahrens durch die Merkmale des Anspruchs 1 und hinsichtlich der Vorrichtung durch die Merkmale des Anspruchs 9 gelöst. Vorteilhafte Ausgestaltungen der Erfindung sind Gegenstand der Unteransprüche.

Bei dem erfindungsgemäßen Verfahren zur Überwachung einer Bahngeschwindigkeit einer durch Rollen bewegten Materialbahn wird eine Antriebsrolle mittels eines Motors angetrieben. Es wird eine momentane Drehzahl des Motors erfasst und aus der erfassten Drehzahl und einem Durchmesser der Antriebsrolle wird eine momentane Bahngeschwindigkeit ermittelt. Die ermittelte momentane Bahngeschwindigkeit wird mit einem vorgegebenen Geschwindigkeitssollwert und einem vorgegebenen Geschwindigkeitsschwellenwert der Bahngeschwindigkeit verglichen. Der Motor wird abgeschaltet, wenn die ermittelte momentane Bahngeschwindigkeit länger als eine zweite Toleranzzeitdauer, die vorgegeben wird, größer als der Geschwindigkeitsschwellenwert ist, oder wenn die Abweichung der ermittelten momentanen Bahngeschwindigkeit von dem Geschwindigkeitssollwert größer als eine Toleranzabweichung ist, die vorgegeben wird, oder wenn die ermittelte momentane Bahngeschwindigkeit größer als der Geschwindigkeitsschwellenwert ist.

Die Erfassung der momentanen Drehzahl des Motors der Antriebsrolle ermöglicht vorteilhaft eine einfache und genaue Ermittelung der Bahngeschwindigkeit der Materialbahn. Der Vergleich der ermittelten Bahngeschwindigkeit mit einem Geschwindigkeitssollwert und einem Geschwindigkeitsschwellenwert erlaubt die Überwachung der Einhaltung eines bevorzugten Bahngeschwindigkeitswertes und die Begrenzung der Bahngeschwindigkeit.

Eine Abschaltung des Motors im Falle, dass die ermittelte momentane Bahngeschwindigkeit von dem Geschwindigkeitssollwert mehr als eine Toleranzabweichung abweicht, ermöglicht es, durch Abschalten des Motors auf mögliche Fehlerfassungen der Drehzahl des Motors zu reagieren, die zu einer fehlerhaften Ermittelung der Bahngeschwindigkeit führen und sich in einer entsprechenden Abweichung der ermittelten Bahngeschwindigkeit von dem Geschwindigkeitssollwert äußern.

Durch eine Abschaltung des Motors im Falle, dass die ermittelte momentane Bahngeschwindigkeit größer als der Geschwindigkeitsschwellenwert ist, kann vorteilhaft verhindert werden, dass die Bahngeschwindigkeit so groß wird, dass sie eine die Materialbahn bearbeitende Maschine beschädigt oder Bedienpersonal der Maschine, beispielsweise bei einer Wartung der Maschine, gefährdet.

Eine Abschaltung des Motors im Falle, dass die ermittelte momentane Bahngeschwindigkeit länger als eine Toleranzzeitdauer größer als der Geschwindigkeitsschwellenwert ist, berücksichtigt vorteilhaft, dass der Motor nicht bei jeder festgestellten Überschreitung des Geschwindigkeitsschwellenwertes sofort abgeschaltet werden braucht. Beispielsweise braucht der Motor nicht abgeschaltet werden, wenn aufgrund von regelungsbedingten und/oder erfassungsbedingten Schwankungen die Ermittlung der momentanen Bahngeschwindigkeit ungenau ist und daher gelegentlich eine tatsächliche nicht gegebene Überschreitung des Geschwindigkeitsschwellenwertes vortäuscht und/oder wenn die Bahngeschwindigkeit nur kurzzeitig den Geschwindigkeitsschwellenwert überschreitet.

Eine Ausgestaltung der Erfindung sieht vor, eine erste Toleranzzeitdauer vorzugeben und den Motor abzuschalten, wenn die Differenz zwischen der ermittelten momentanen Bahngeschwindigkeit und dem Geschwindigkeitssollwert länger als die erste Toleranzzeitdauer konstant bleibt.

Diese Ausgestaltung der Erfindung wirkt vorteilhaft möglichen Manipulationen der Bahngeschwindigkeitsüberwachung entgegen, die eine tatsächlich nicht bestehende Übereinstimmung der ermittelten Bahngeschwindigkeit mit dem Geschwindigkeitssollwert vortäuschen. Dabei wird ausgenutzt, dass eine länger andauernde Konstanz der Differenz zwischen der ermittelten momentanen Bahngeschwindigkeit und dem Geschwindigkeitssollwert unwahrscheinlich ist und auf eine Manipulation hindeutet.

In einer weiteren Ausgestaltung der Erfindung wird aus dem Geschwindigkeitssollwert und dem Durchmesser der Antriebsrolle ein Drehzahlsollwert für die Drehzahl des Motors ermittelt und die Drehzahl des Motors wird auf diesen Drehzahlsollwert geregelt.

Diese Ausgestaltung ermöglicht es vorteilhaft, die Drehzahl des Motors einer Änderung des Geschwindigkeitssollwertes und/oder einer Änderung des Durchmessers der Antriebsrolle anzupassen.

In einer weiteren Ausgestaltung der Erfindung wird im Falle, dass die Antriebsrolle einen sich zeitlich ändernden Durchmesser hat, der Durchmesser der Antriebsrolle periodisch erfasst und der erfasste momentane Durchmesser zur Ermittelung der momentanen Bahngeschwindigkeit verwendet.

Diese Ausgestaltung der Erfindung bezieht sich auf eine Antriebsrolle, auf die die Materialbahn aufgewickelt oder von der die Materialbahn abgewickelt wird und deren Durchmesser sich daher zeitlich ändert. Unter dem momentanen Durchmesser einer derartigen Antriebsrolle wird in diesem Dokument dementsprechend der Durchmesser der Rolle mit dem momentan auf sie gewickelten Teil der Materialbahn verstanden. Die Erfassung eines momentanen Durchmessers einer derartigen Antriebsrolle ist vorteilhaft, da sich nur anhand des tatsächlichen momentanen Durchmessers die momentane Bahngeschwindigkeit zuverlässig anhand der momentanen Drehzahl ermitteln lässt.

Dabei werden vorzugsweise während jeder Umdrehung der Antriebsrolle Durchmesser der Antriebsrolle an verschiedenen Stellen von mindestens einer Sensorposition erfasst, für jede Umdrehung wird unter den erfassten Durchmessern ein größter und ein kleinster erfasster Durchmesser ermittelt, es werden eine Toleranzdifferenz für die Durchmesser, eine Umdrehungsanzahl $N_1$ und eine Toleranzanzahl $N_2$ vorgegeben, und der Motor wird abgeschaltet, wenn für mehr als $N_2$ von $N_1$ aufeinander folgenden Umdrehungen der Antriebsrolle die Differenz zwischen dem größten und dem kleinsten jeweils erfassten Durchmesser größer als die Toleranzdifferenz ist.

Durch eine derartige Erfassung und Auswertung des Durchmessers an verschiedenen Stellen der Antriebsrolle während einer Umdrehung kann eine Unwucht der Antriebsrolle zuverlässig erkannt werden, die beispielsweise durch eine asymmetrische Wicklung der Materialbahn auf der Antriebsrolle zurückzuführen ist, und der Motor kann bei erkannter Unwucht abgeschaltet werden. Dies ist vorteilhaft, da eine derartige Unwucht die Maschine schon bei kleinen Bahngeschwindigkeiten zerstören kann, die von dem Geschwindigkeitsschwellenwert nicht berücksichtigt werden.

Das erfindungsgemäße Verfahren eignet sich insbesondere vorteilhaft zur Überwachung der Bahngeschwindigkeit einer Materialbahn in einer Papiermaschine, Rollenschneidmaschine oder Streichmaschine.

Eine erfindungsgemäße Vorrichtung zur Überwachung einer Bahngeschwindigkeit einer durch Rollen bewegten Materialbahn mittels des erfindungsgemäßen Verfahrens umfasst eine Antriebsrolle sowie einen Motor zum Antrieb der Antriebsrolle. Ferner umfasst es eine Drehzahlerfassungseinheit zur Erfassung einer Drehzahl des Motors, und eine Steuereinheit, mittels derer von der Drehzahlerfassungseinheit erfasste Signale zur Ermittelung einer momentanen Bahngeschwindigkeit auswertbar sind und der Motor in Abhängigkeit von dem Auswertungsergebnis abschaltbar ist.

Wenn die Antriebsrolle einen zeitlich veränderlichen Durchmesser hat, weist die Vorrichtung ferner vorzugsweise wenigstens eine Durchmessererfassungseinheit zur Erfassung eines Durchmessers der Antriebsrolle auf. Dabei umfasst die Durchmessererfassungseinheit besonders bevorzugt einen Entfernungsmesser zur Erfassung einer Entfernung des Entfernungsmessers zu einer Außenoberfläche der Antriebsrolle.

Dies ermöglicht die Durchführung des erfindungsgemäßen Verfahrens mit den oben genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    ein Blockdiagramm einer Vorrichtung zur Überwachung einer Bahngeschwindigkeit einer durch Rollen bewegten Materialbahn, und

FIG 2    ein Blockdiagramm eines Verfahrens zur Überwachung einer Bahngeschwindigkeit einer durch Rollen bewegten Materialbahn.

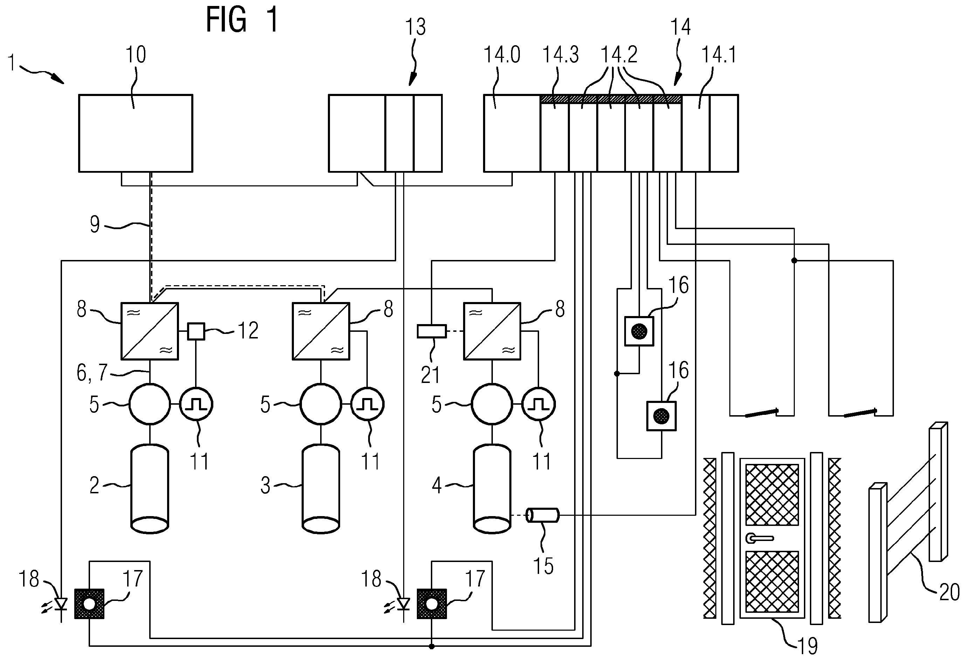

Figur 1 zeigt ein Blockdiagramm einer Vorrichtung 1 zur Überwachung einer Bahngeschwindigkeit einer (nicht dargestellten) Materialbahn in einer die Materialbahn bearbeitenden Maschine. Beispielsweise besteht die Materialbahn aus Papier und die Maschine ist eine Papiermaschine, Rollenschneidmaschine oder Streichmaschine. Die spezifische Ausbildung der Materialbahn und der Maschine ist jedoch nicht erfindungsrelevant.

Die Materialbahn wird durch Antriebsrollen 2, 3, 4 bewegt. Jede Antriebsrolle 2, 3, 4 wird durch einen Motor 5 über eine hier nicht näher dargestellte Motorwelle 6 und ein hier ebenfalls nicht näher dargestelltes Getriebe 7 angetrieben.

Im dargestellten Ausführungsbeispiel sind eine erste Antriebsrolle 2 und eine zweite Antriebsrolle 3 Rollen mit konstantem Rollendurchmesser, die lediglich dem Antrieb der Materialbahn dienen, ohne dass die Materialbahn auf diese Antriebsrollen 2, 3 aufgewickelt oder von ihnen abgewickelt wird. Eine dritte Antriebsrolle 4 ist eine Rolle mit variablem Durchmesser, auf die die Materialbahn aufgewickelt oder von der die Materialbahn abgewickelt wird.

Die Motoren 5 werden jeweils über einen Frequenzumrichter 8 mit elektrischem Strom versorgt. Die Frequenzumrichter 8 sind über einen Feldbus 9, beispielsweise einen PROFIBUS ( = Pro-cess Field Bus), mit einer Steuereinheit 10 verbunden und ansteuerbar.

Die Vorrichtung weist für jeden Motor 5 eine Drehzahlerfassungseinheit 11 zur Erfassung einer Drehzahl des jeweiligen Motors 5 auf. Die von einer Drehzahlerfassungseinheit 11 erfasste Drehzahl wird über den dem jeweiligen Motor 5 zugeordneten Frequenzumrichter 8 und den Feldbus 9 an die Steuereinheit 10 übermittelt und von der Steuereinheit 10 in unten näher beschriebener Weise ausgewertet. Die der ersten Antriebsrolle 2 zugeordnete Drehzahlerfassungseinheit 11 weist im gezeigten Ausführungsbeispiel ein optionales Gebersignalauswertegerät 12 auf, mittels dessen ein Gebersignal dem zugehörigen Frequenzumrichter 8 in geeigneter Form zur Verfügung gestellt wird.

Die Steuereinheit 10 ist über eine erste Peripheriebaugruppe 13 und eine zweite Peripheriebaugruppe 14 mit Peripheriegeräten 15 bis 21 verbunden. Die Peripheriebaugruppen 13, 14 sind prinzipiell gleich ausgebildet. Die Peripheriegeräte 15 bis 21 umfassen im dargestellten Ausführungsbeispiel eine Durchmessererfassungseinheit 15, Notausschalter 16, Sicherheitsschalter 17, Anzeigeelemente 18, wenigstens eine Sicherheitstür 19, wenigstens eine Lichtschranke 20 und eine Schützeinheit 21.

Die Durchmessererfassungseinheit 15 erfasst periodisch einen Durchmesser der dritten Antriebsrolle 4. Dazu weist sie einen Entfernungsmesser zur Erfassung einer Entfernung des Entfernungsmessers zu einer Außenoberfläche der dritten Antriebsrolle 4 auf. Die von der Durchmessererfassungseinheit 15 erfassten Signale werden an ein Analogmodul 14.1 der zweiten Peripheriebaugruppe 14 übermittelt und von einem Kommunikationsmodul 14.0 der zweiten Peripheriebaugruppe 14 an die Steuereinheit 10 weitergeleitet.

Die Notausschalter 16 ermöglichen ein manuelles zeitverzögertes Abschalten der Antriebe bis zu deren Stillstand. Die Sicherheitsschalter 17 ermöglichen ein manuelles Abschalten der Antriebe, wobei hier ein An- und Abschalten der Antriebe mit dem elektrischen An- und Abschalten aller Motoren 5 gleichgesetzt wird. Die Notausschalter 16 und die Sicherheitsschalter 17 sind jeweils mit einem Digitalmodul 14.2 der zweiten Peripheriebaugruppe 14 verbunden, über das sie dem Kommunikationsmodul 14.0 ihren jeweiligen Schaltzustand übermitteln. Diese Schaltzustände werden von der zweiten Peripheriebaugruppe 14 an die Steuereinheit 10 weitergeleitet.

Jedes Anzeigeelement 18 ist einem Sicherheitsschalter 17 zugeordnet und zeigt dessen Schaltzustand an. Dazu ist es mit der ersten Peripheriebaugruppe 13 verbunden, über die es angesteuert wird. Jedes Anzeigeelement 18 weist eine Leuchtdiode auf, die beispielsweise in Durchlassrichtung betrieben wird, wenn die Antriebe mittels des zugehörigen Sicherheitsschalters 17 abgeschaltet sind.

Die Sicherheitstür 19 und die Lichtschranke 20 dienen der Zugangskontrolle zu der Maschine. Mittels der Lichtschranke 20 wird der Zugang zu der Maschine überwacht und mittels der Sicherheitstür 19 wird ein Zugang zu der Maschine nur in als gefahrlos eingestuften Situationen ermöglicht. Die Sicherheitstür 19 und die Lichtschranke 20 sind mit einem Digitalmodul 14.2 der zweiten Peripheriebaugruppe 14 verbunden, über die die Zustände der Sicherheitstür 19 (ver- oder entriegelt) und die Signale der Lichtschranke 20 gesteuert bzw. überwacht werden können. Anstelle von nur einer Sicherheitstür 19 und nur einer Lichtschranke 20 können auch mehrere Sicherheitstüren 19 und Lichtschranken 20 vorgesehen sein. Beispielsweise können Sicherheitstüren 19 und Lichtschranken 20 vorgesehen sein, die jeweils nur einen Zugang zu einem bestimmten Bereich der Maschine geben bzw. überwachen.

Über die Schützeinheit 21 kann der Motor der dritten Antriebsrolle 4 ab- und angeschaltet werden. Die Schützeinheit 21 ist mit einem Digitalausgang 14.3 der zweiten Peripheriebaugruppe 14 verbunden und über diesen mittels der Steuereinheit 10 über die zweite Peripheriebaugruppe 14 ansteuerbar.

Die Motoren 5 der anderen beiden Antriebsrollen 2, 3 können mittels der Steuereinheit 10 direkt über den Feldbus 9 an- und abgeschaltet werden, wie durch den gestrichelt dargestellten Abschnitt des Feldbusses 9 angedeutet ist.

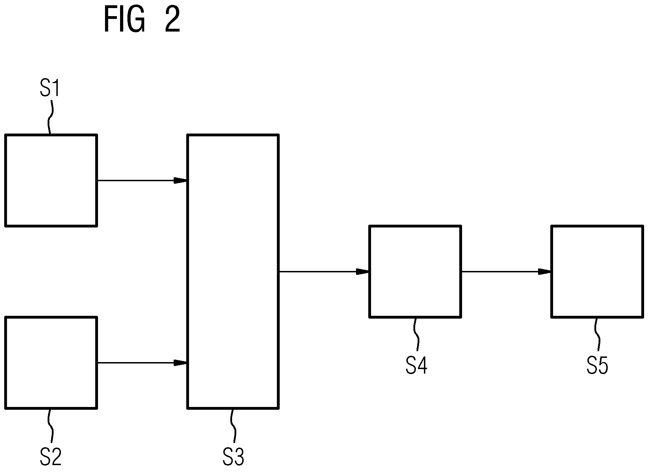

Figur 2 zeigt schematisch in einem Blockdiagramm Verfahrensschritte S1 bis S5 eines Verfahrens zur Überwachung der Bahngeschwindigkeit der durch die Antriebsrollen 2, 3, 4 bewegten Materialbahn.

Bei dem Verfahren werden in einem ersten Verfahrensschritt S1 mittels der Drehzahlerfassungseinheiten 11 die momentanen Drehzahlen der Motoren 5 erfasst und gleichzeitig wird in einem zweiten Verfahrensschritt S2 mittels der Durchmessererfassungseinheit 15 der momentane Durchmesser der dritten Antriebsrolle 4 erfasst (die konstanten Durchmesser der beiden anderen Antriebsrollen 2, 3 sind in der Steuereinheit 10 hinterlegt). Die Drehzahlerfassungen erfolgen dabei an den Motorwellen 6 der Motoren 5. Ein Anfangswert des Durchmessers der dritten Antriebsrolle 4 wird entweder manuell eingegeben oder mittels der Gleichung [1] und den anderen Antriebsrollen 2, 3 zugeordneten Daten ermittelt.

Die erfassten Drehzahlen und Durchmesser werden an die Steuereinheit 10 übermittelt. Um auszuschließen, dass Drehzahl-sollwerte durch unsichere Kommunikation zurück an die Steuereinheit 10 als Drehzahlistwerte übermittelt werden, werden die erfassten Drehzahlen vorzugsweise permanent auf Signalrauschen überwacht. Die Überwachung auf Signalrauschen dient auch der Erkennung einer eingefrorenen Kommunikation.

In einem dritten Verfahrensschritt S3 wird von der Steuereinheit 10 für wenigstens eine Antriebsrolle 2, 3, 4 eine momentane Bahngeschwindigkeit $v_{ist}$ der Materialbahn gemäß

$$v_{ist} = \pi\ d\ n/i \qquad\qquad\qquad [1]$$

ermittelt, wobei n die erfasste Drehzahl des zugehörigen Motors 5, d den Durchmesser und i die Getriebeübersetzung der jeweiligen Antriebsrolle 2, 3, 4 bezeichnen und n die Kreiszahl ist (i bezeichnet also das Verhältnis der Drehzahlen der jeweiligen Motorwelle 6 und Antriebsrolle 2, 3, 4).

In einem vierten Verfahrensschritt S4 wird die ermittelte momentane Bahngeschwindigkeit von der Steuereinheit 10 ausgewertet und in dem fünften Verfahrensschritt S5 wird die Maschine schließlich von der Steuereinheit 10 in Abhängigkeit von dem Auswertungsergebnis erforderlichenfalls abgeschaltet.

Bei der Auswertung der ermittelten momentanen Bahngeschwindigkeit $v_{ist}$ wird diese mit einem vorgegebenen Geschwindigkeitssollwert $v_{soll}$, einem vorgegebenen Geschwindigkeitsschwellenwert $v_{max}$ und einem Geschwindigkeits-grenzwert $v_{grenz}$ der Bahngeschwindigkeit verglichen. Dabei sind $v_{soll}$, $v_{max}$ und $v_{grenz}$ von dem Betriebszustand der Maschine abhängig. In einem Wartungszustand der Maschine ist der Geschwindigkeitsschwellenwert $v_{max}$ eine Kriech-geschwindigkeit der Materialbahn und $v_{grenz}$ eine Bahngeschwindigkeit, die nicht überschritten werden darf, um Bedienpersonal im Bereich der Maschine nicht zu gefährden. Z.B. ist im Wartungszustand $v_{grenz} = 1{,}5\ v_{max}$ und $v_{max} = 15$ m/min, um die Gefahren für das Bedienpersonal auf ein vertretbares Maß zu reduzieren. Im Normalbetrieb ist $v_{max}$ deutlich höher als die Kriechgeschwindigkeit und $v_{grenz}$ ist eine maximale mechanische Bahngeschwindigkeit, die nicht überschritten werden darf, um Beschädigungen der Maschine zu vermeiden. Entsprechend unterscheiden sich die Geschwindigkeitssollwerte $v_{soll}$ im Wartungs- und Normalbetrieb und sind den entsprechenden Geschwindigkeitsschwellenwerten $v_{max}$ angepasst. Die Geschwindigkeitsschwellenwerte $v_{max}$ und Geschwindigkeitsgrenzwerte $v_{grenz}$ für die verschiedenen Betriebszustände werden als Festwerte in einem Sicherheitsprogramm hinterlegt, das von der Steuereinheit 10 ausgeführt wird.

Zur Auswertung von $v_{ist}$ wird eine Toleranzabweichung von $v_{soll}$ vorgegeben. Die Maschine wird abgeschaltet, wenn $v_{ist}$ um mehr als die Toleranzabweichung von $v_{soll}$ abweicht. Diese Maßnahme dient dazu, mögliche Fehlerfassungen der Drehzahlen der Motoren 5 und/oder des Durchmessers der dritten Antriebsrolle 4 zu berücksichtigen, die zu einer fehlerhaften Ermittlung von $v_{ist}$ führen. Die Abschaltung der Maschine (d.h. der Motoren 5) erfolgt dabei in üblicher Weise ("betriebliche Abschaltung"), solange $v_{ist}$ nicht den Geschwindigkeitsschwellenwert $v_{max}$ überschreitet, da in diesem Fall kein gefährlicher Zustand der Maschine droht und daher eine Notabschaltung nicht erforderlich ist.

Zum Schutz vor Manipulationen wird die Maschine ferner betrieblich abgeschaltet, wenn die Differenz $v_{ist} - v_{soll}$ länger als eine vorgegebene erste Toleranzzeitdauer konstant bleibt, insbesondere also, wenn $v_{ist}$ und $v_{soll}$ länger als die erste Toleranzzeitdauer übereinstimmen. Dabei wird als erste Toleranzzeitdauer vorzugsweise die Dauer einer Anzahl von Umdrehungen einer Antriebsrolle 2, 3, 4 vorgegeben. In einer Ausgestaltung des Ausführungsbeispiels wird die Maschine ferner betrieblich abgeschaltet, wenn für eine geeignet festzulegende Anzahl aufeinander folgender Motorumdrehungen, beispielsweise für zwei aufeinander folgende Umdrehungen, exakt gleiche Drehzahlen ermittelt werden, da auch dieses Verhalten unwahrscheinlich ist und auf eine Manipulation oder einen Systemfehler hindeutet.

Wenn $v_{ist}$ größer als $v_{max}$ ist, erfolgt eine sichere Abschaltung der Maschine. In einem abgewandelten Ausführungsbeispiel erfolgt die sichere Abschaltung der Maschine erst, wenn $v_{ist}$ länger als eine vorgegebene zweite Toleranzzeitdauer größer als $v_{max}$ ist, sofern $v_{ist}$ während der zweiten Toleranzzeitdauer nicht $v_{grenz}$ überschreitet. In einer weiteren Abwandlung des Ausführungsbeispiels braucht die Maschine im Falle, dass $v_{max}$ die Kriechgeschwindigkeit und $v_{grenz} > v_{ist} > v_{max}$ ist, nur dann abgeschaltet werden, wenn eine Schutztür 19 entriegelt ist oder sich eine Person im durch die Schutztür 19 geschützten Bereich der Maschine befindet.

Im Fall $v_{ist} > v_{grenz}$ wird die Maschine in jedem Fall sofort notabgeschaltet.

Für die dritte Antriebsrolle 4 wird vorzugsweise anhand von Gleichung [1] aus dem jeweiligen Geschwindigkeitssollwert $v_{soll}$ und dem erfassten momentanen Durchmesser eine zugehörige momentane Solldrehzahl $n_{soll}$ des zugehörigen Motors 5 ermittelt und entsprechend eingestellt.

Im Falle der dritten Antriebsrolle 4 kann ein Wellenbruch der zugehörigen Motorwelle 6 durch eine Analyse der erfassten Drehzahl und des erfassten Durchmessers erkannt werden, da die Drehzahl an der Motorwelle 6 und der Durchmesser unabhängig davon an der dritten Antriebsrolle 4 erfasst werden. Im Falle eines erkannten Wellenbruchs wird die Maschine ebenfalls abgeschaltet.

Sobald als Betriebszustand der Maschine der Wartungsbetrieb angewählt wurde, erfolgt ein betriebliches Abbremsen der Materialbahn auf eine Bandgeschwindigkeit, die kleiner als die Kriechgeschwindigkeit ist. Sobald die Kriechgeschwindigkeit für alle Antriebe unterschritten ist, wird die Bandgeschwindigkeit mit der Kriechgeschwindigkeit als $v_{max}$ wie oben beschrieben überwacht. Zusätzlich wird ein Freigabesignal fehlersicher abgesetzt, das das Erreichen der Kriechgeschwindigkeit signalisiert und als Freigabe für die Entriegelung der Schutztüren 19 verwendet wird.

Eine weitere Ausgestaltung des erfindungsgemäßen Verfahrens sieht ferner eine Unwuchtüberwachung der dritten Antriebsrolle 4 vor. Dazu wird der Durchmesser der dritten Antriebsrolle 4 periodisch mit einer genügend hohen Abtastrate erfasst, beispielsweise mindestens fünfmal pro Umdrehung der dritten Antriebsrolle 4. Aus diesen Messungen werden für jede Umdrehung ein größter und ein kleinster erfasster Durchmesser ermittelt. Eine zu große Diskrepanz zwischen diesen beiden Durchmesserwerten deutet auf eine Unwucht der dritten Antriebsrolle 4 hin, die beispielsweise durch eine asymmetrische Wicklung der Materialbahn auf der dritten Antriebsrolle 4 zurückzuführen ist. Eine derartige Unwucht kann die Maschine schon bei wesentlich kleineren Bahngeschwindigkeiten als der maximalen mechanischen Bahngeschwindigkeit, die im Normalbetrieb als $v_{grenz}$ gesetzt wird, zerstören. Daher ist die Unwuchtüberwachung eine vorteilhafte Ausgestaltung des erfindungsgemäßen Verfahrens.

Da die Messungen des Durchmessers der dritten Antriebsrolle 4 aber in der Regel relativ ungenau sind, wird eine Glättung der Messungen durchgeführt werden, die mehrere Umdrehungen der dritten Antriebsrolle 4 berücksichtigt. Dazu werden eine Toleranzdifferenz für die erfassten Durchmesser, eine Umdrehungsanzahl $N_1$ und eine Toleranzanzahl $N_2$ vorgegeben. Die Maschine wird abgeschaltet, wenn für mehr als $N_2$ von $N_1$ aufeinander folgenden Umdrehungen der dritten Antriebsrolle 4 die Differenz zwischen dem größten und dem kleinsten jeweils während einer Umdrehung erfassten Durchmesser größer als die Toleranzdifferenz ist. Beispielsweise wird für $N_2 = N_1/2$ die Maschine abgeschaltet, wenn die Differenz für mehr als die Hälfte der $N_1$ Umdrehungen größer als die Toleranzdifferenz ist.

Die Durchmessermessungen werden dabei ständig anhand der parallel durchgeführten Drehzahlmessungen auf Plausibilität überwacht, um einen Ausfall der Durchmessermessungen diagnostizieren zu können.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1.  Verfahren zur Überwachung einer Bahngeschwindigkeit einer durch Rollen (2, 3, 4) bewegten Materialbahn, wobei

    - eine Antriebsrolle (2, 3, 4) mittels eines Motors (5) angetrieben wird,
    - eine momentane Drehzahl des Motors (5) erfasst wird,
    - aus der erfassten Drehzahl des Motors (5) und einem Durchmesser der Antriebsrolle (2, 3, 4) eine momentane Bahngeschwindigkeit ermittelt wird, **dadurch gekennzeichnet, dass**

    - die ermittelte momentane Bahngeschwindigkeit mit einem vorgegebenen Geschwindigkeitssollwert und einem vorgegebenen Geschwindigkeitsschwellenwert der Bahngeschwindigkeit verglichen wird,

    - und der Motor (5) abgeschaltet wird,

    - wenn die ermittelte momentane Bahngeschwindigkeit länger als eine zweite Toleranzzeitdauer, die vorgegeben wird, größer als der Geschwindigkeitsschwellenwert ist,
    - oder wenn die Abweichung der ermittelten momentanen Bahngeschwindigkeit von dem Geschwindigkeitssollwert größer als eine Toleranzabweichung ist, die vorgegeben wird,
    - oder wenn die ermittelte momentane Bahngeschwindigkeit größer als der Geschwindigkeitsschwellenwert ist.

2.  Verfahren nach Anspruch 1,
    **dadurch gekennzeichnet, dass** die Antriebsrolle (2, 3, 4) mittels des Motors (5) über eine Antriebswelle und/oder ein Getriebe (7) angetrieben wird.

3.  Verfahren nach einem der vorhergehenden Ansprüche,
    **dadurch gekennzeichnet, dass** eine erste Toleranzzeitdauer vorgegeben wird und der Motor (5) abgeschaltet wird, wenn die Differenz zwischen der ermittelten momentanen Bahngeschwindigkeit und dem Geschwindigkeitssollwert länger als die erste Toleranzzeitdauer konstant bleibt.

4.  Verfahren nach einem der vorhergehenden Ansprüche,
    **dadurch gekennzeichnet, dass** aus dem Geschwindigkeitssollwert und dem Durchmesser der Antriebsrolle (2, 3, 4) ein Drehzahlsollwert für die Drehzahl des Motors (5) ermittelt wird und die Drehzahl des Motors (5) auf diesen Drehzahlsollwert geregelt wird.

5.  Verfahren nach einem der vorhergehenden Ansprüche,
    **dadurch gekennzeichnet, dass** im Falle, dass die Antriebsrolle (2, 3, 4) einen sich zeitlich ändernden Durchmesser hat, der Durchmesser der Antriebsrolle (2, 3, 4) periodisch erfasst wird und der erfasste momentane Durchmesser zur Ermittelung der momentanen Bahngeschwindigkeit verwendet wird.

6.  Verfahren nach Anspruch 5,
    **dadurch gekennzeichnet, dass** während jeder Umdrehung der Antriebsrolle (2, 3, 4) Durchmesser der Antriebsrolle (2, 3, 4) an verschiedenen Stellen erfasst werden, für jede Umdrehung unter den erfassten Durchmessern ein größter und ein kleinster erfasster Durchmesser ermittelt wird, eine Toleranzdifferenz für die Durchmesser, eine Umdrehungsanzahl $N_1$ und eine Toleranzanzahl $N_2$ vorgegeben werden, und der Motor (5) abgeschaltet wird, wenn für mehr als $N_2$ von $N_1$ aufeinander folgenden Umdrehungen der Antriebsrolle (2, 3, 4) die Differenz zwischen dem größten und dem kleinsten jeweils erfassten Durchmesser größer als die Toleranzdifferenz ist.

7.  Verfahren nach einem der vorhergehenden Ansprüche,
    **dadurch gekennzeichnet, dass** der Motor (5) abgeschaltet wird, wenn für eine vorgegebene Anzahl aufeinander folgender Motorumdrehungen exakt gleiche Drehzahlen erfasst werden.

8.  Verwendung des Verfahrens nach einem der vorhergehenden Ansprüche zur Überwachung der Bahngeschwindigkeit einer Materialbahn in einer Papiermaschine, Rollenschneidmaschine oder Streichmaschine.

9.  Vorrichtung (1) zur Überwachung einer Bahngeschwindigkeit einer durch Rollen (2, 3, 4) bewegten Materialbahn mittels eines Verfahrens gemäß einem der Ansprüche 1 bis 7, umfassend

    - eine Antriebsrolle (2, 3, 4),
    - einen Motor (5) zum Antrieb der Antriebsrolle (2, 3, 4),
    - eine Drehzahlerfassungseinheit (11) zur Erfassung einer Drehzahl des Motors (5), und
    - eine Steuereinheit (10), **dadurch gekennzeichnet, dass** die Steuereinheit derart konfiguriert ist, dass mittels derer von der Drehzahlerfassungseinheit (11) erfasste Signale zur Ermittelung einer momentanen Bahngeschwindigkeit auswertbar sind und der Motor (5) in Abhängigkeit von dem Auswertungsergebnis abschaltbar ist.

10. Vorrichtung (1) nach Anspruch 9,
    **gekennzeichnet durch** wenigstens eine Durchmessererfassungseinheit (15) zur Erfassung eines Durchmessers der Antriebsrolle (2, 3, 4), falls die Antriebsrolle (2, 3, 4) einen sich zeitlich ändernden Durchmesser hat.

11. Vorrichtung (1) nach Anspruch 10,
    **dadurch gekennzeichnet, dass** die Durchmessererfassungseinheit (15) einen Entfernungsmesser zur Erfassung einer Entfernung des Entfernungsmessers zu einer Außenoberfläche der Antriebsrolle (2, 3, 4) umfasst.

**Claims**

1.  Method for monitoring a web speed of a material web moved by rollers (2, 3, 4), wherein

    - a drive roller (2, 3, 4) is driven by means of a motor (5),
    - an instantaneous rotational speed of the motor (5) is measured,
    - from the measured rotational speed of the motor (5) and a diameter of the drive roller (2, 3, 4), an instantaneous web speed is determined,
**characterised in that**
- the instantaneous web speed determined is compared with a predefined speed target value and a predefined speed threshold value of the web speed,
- and the motor (5) is shut down,

- if the instantaneous web speed determined is greater than the speed threshold value for longer than a second tolerance period which is predefined,
- or if the deviation of the determined web speed from the speed target value is greater than a tolerance deviation which is predefined,
- or if the instantaneous web speed determined is greater than the speed threshold value.

2. Method according to claim 1,
   **characterised in that** the drive roller (2, 3, 4) is driven by means of the motor (5) via a drive shaft and/or gears (7).

3. Method according to one of the preceding claims,
   **characterised in that** a first tolerance period is predefined and the motor (5) is switched off if the difference between the instantaneous web speed determined and the speed target value remains constant for longer than the first tolerance period.

4. Method according to one of the preceding claims,
   **characterised in that** a target value for the rotational speed of the motor (5) is determined from the speed target value and the diameter of the drive roller (2, 3, 4) and the rotational speed of the motor (5) is adjusted to this rotational speed target value.

5. Method according to one of the preceding claims,
   **characterised in that**, in the case that the drive roller (2, 3, 4) has a diameter that varies over time, the diameter of the drive roller (2, 3, 4) is periodically measured and the instantaneous diameter measured is used to determine the instantaneous web speed.

6. Method according to claim 5,
   **characterised in that**, during each revolution of the drive roller (2, 3, 4), diameters of the drive roller (2, 3, 4) are measured at different points, for each revolution a largest and a smallest measured diameter of the measured diameters is determined, a tolerance difference for the diameters, a number of revolution $N_1$ and a tolerance number $N_2$ are predefined, and the motor (5) is switched off if the difference between the largest and the smallest diameter measured is greater than the tolerance difference for more than $N_2$ of $N_1$ consecutive revolutions of the drive roller (2, 3, 4).

7. Method according to one of the preceding claims,
   **characterised in that** the motor (5) is switched off if exactly the same rotational speeds are measured for a predefined number of consecutive motor revolutions.

8. Use of the method according to one of the preceding claims for monitoring the web speed of a material web in a paper machine, reel slitter or coater.

9. Device (1) for monitoring a web speed of a material web moved by rollers (2, 3, 4) by means of a method according to one of claims 1 to 7, comprising

   - a drive roller (2, 3, 4),
   - a motor (5) for driving the drive roller (2, 3, 4),
   - a rotational speed measuring unit (11) for measuring a rotational speed of the motor (5), and
   - a control unit (10), **characterised in that** the control unit is configured directly, by means of which signals acquired by the rotational speed measuring unit (11) can be evaluated to determine an instantaneous web speed and the motor (5) can be switched off depending on the evaluation result.

10. Device (1) according to claim 9,
    **characterised by** at least one diameter measuring unit (15) for measuring a diameter of the drive roller (2, 3, 4) if the drive roller (2, 3, 4) has a diameter which varies over time.

**11.** Device (1) according to claim 10,
**characterised in that** the diameter measuring unit (15) comprises a distance meter for measuring a distance of the distance meter from an external surface of the drive roller (2, 3, 4).

**Revendications**

**1.** Procédé de contrôle de la vitesse d'une bande de matière déplacée par des rouleaux ( 2, 3, 4 ), dans lequel

- on entraîne un rouleau ( 2, 3, 4 ) moteur à l'aide d'un moteur ( 5 ),
- on relève une vitesse de rotation instantanée du moteur ( 5 ),
- on détermine une vitesse instantanée de la bande à partir de la vitesse de rotation relevée du moteur ( 5 ) et d'un diamètre du rouleau ( 2, 3, 4 ) moteur,
**caractérisé en ce que**
- on compare la vitesse instantanée de la bande, qui a été déterminée, à une valeur de consigne donnée à l'avance et à une valeur de seuil donnée à l'avance de la vitesse de la bande,
- on met le moteur ( 5 ) à l'arrêt,

- si la vitesse instantanée de la bande qui a été déterminée est pendant plus longtemps qu'une deuxième durée de tolérance donnée à l'avance, plus grande que la valeur de seuil de la vitesse,
- ou si l'écart de la vitesse instantanée de la bande, qui a été déterminée, à la valeur de consigne de la vitesse est plus grand qu'un écart de tolérance donné à l'avance,
- ou si la vitesse instantanée de la bande, qui a été déterminée, est plus grande que la valeur de seuil de la vitesse.

**2.** Procédé suivant la revendication 1,
**caractérisé en ce que** l'on entraîne le rouleau ( 2, 3, 4 ) moteur à l'aide du moteur ( 5 ) par un arbre d'entraînement et/ou par une transmission ( 7 ).

**3.** Procédé suivant l'une des revendications précédentes,
**caractérisé en ce que** l'on se donne à l'avance une première durée de tolérance et on met le moteur ( 5 ) à l'arrêt si la différence entre la vitesse instantanée de la bande, qui a été déterminée, et la valeur de consigne de la vitesse reste constante pendant plus longtemps que la première durée de tolérance.

**4.** Procédé suivant l'une des revendications précédentes,
**caractérisé en ce que** l'on détermine une valeur de consigne de la vitesse de rotation du moteur ( 5 ) à partir de la valeur de consigne de la vitesse et du diamètre du rouleau ( 2, 3, 4 ) moteur et on régule la vitesse de rotation du moteur ( 5 ) sur cette valeur de consigne de la vitesse de rotation.

**5.** Procédé suivant l'une des revendications précédentes,
**caractérisé en ce que**, si le rouleau ( 2, 3, 4 ) moteur a un diamètre qui varie dans le temps, on relève périodiquement le diamètre du rouleau ( 2, 3, 4 ) moteur et l'on utilise le diamètre instantané relevé pour la détermination de la vitesse instantanée de la bande.

**6.** Procédé suivant la revendication 5,
**caractérisé en ce que**, pendant chaque tour du rouleau ( 2, 3, 4 ) moteur, on relève le diamètre du rouleau ( 2, 3, 4 ) moteur en divers endroits pour chaque tour, on détermine parmi les diamètres relevés un diamètre relevé le plus grand et un diamètre relevé le plus petit, on se donne à l'avance une différence de tolérance pour le diamètre, un nombre de tour $N_1$ et un nombre $N_2$ de tolérance, et l'on met le moteur ( 5 ) à l'arrêt si, pour plus de $N_2$ parmi les $N_1$ tours qui se succèdent du rouleau ( 2, 3, 4 ) moteur, la différence entre le diamètre relevé le plus grand et le diamètre relevé le plus petit est plus grande que la différence de tolérance.

**7.** Procédé suivant l'une des revendications précédentes,
**caractérisé en ce qu'**on met le moteur ( 5 ) à l'arrêt si, pour un nombre donné à l'avance de tours du moteur se succédant, on relève exactement les mêmes vitesses de rotation.

**8.** Utilisation du procédé suivant l'une des revendications précédentes pour le contrôle de la vitesse d'une bande de matière dans une machine à papier, dans une bobineuse/trancheuse ou dans une coucheuse.

**9.** Dispositif ( 1 ) de contrôle de la vitesse d'une bande de matière déplacée par des rouleaux ( 2, 3, 4 ) à l'aide d'un procédé suivant l'une des revendications 1 à 7, comprenant

- un rouleau ( 2, 3, 4 ) moteur,
- un moteur ( 5 ) pour entraîner le rouleau ( 2, 3, 4 ) moteur,
- une unité ( 11 ) de détection d'une vitesse de rotation pour relever une vitesse de rotation du moteur ( 5 ) et
- une unité ( 10 ) de commande,

**caractérisé en ce que** l'unité de commande est configurée de manière à ce que des signaux relevés au moyen de l'unité ( 11 ) de détection de la vitesse de rotation puissent être exploités pour la détermination d'une vitesse instantanée de la bande et de manière à ce que le moteur ( 5 ) puisse être mis à l'arrêt en fonction du résultat de l'exploitation.

**10.** Dispositif ( 1 ) suivant la revendication 9,
**caractérisé par** au moins une unité ( 15 ) de relevé du diamètre pour relever un diamètre du rouleau ( 2, 3, 4 ) moteur si le rouleau ( 2, 3, 4 ) moteur a un diamètre variable dans le temps.

**11.** Dispositif ( 1 ) suivant la revendication 10,
**caractérisé en ce que** l'unité ( 15 ) de relevé d'un diamètre comprend un dispositif de mesure de l'éloignement pour détecter l'éloignement du dispositif de mesure de l'éloignement d'une surface extérieure du rouleau ( 2, 3, 4 ) moteur.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4430550 A1
- DE 10104795 A1
- DE 2613600 A1
- DE 69202132 T2
- EP 0698572 A1